Europäisches Patentamt

(19) European Patent Office

Office européen des brevets

(11) Veröffentlichungsnummer: **0 101 550**
**B1**

(12) **EUROPÄISCHE PATENTSCHRIFT**

(45) Veröffentlichungstag der Patentschrift:
14.10.87

(51) Int. Cl.⁴: **H 01 J 47/02, G 01 T 1/185**

(21) Anmeldenummer: **83106549.5**

(22) Anmeldetag: **05.07.83**

(54) **Messgerät zur Messung von Beta-Gamma-Strahlungsfeldern.**

(30) Priorität: **21.07.82 DE 3227223**

(43) Veröffentlichungstag der Anmeldung:
**29.02.84 Patentblatt 84/9**

(45) Bekanntmachung des Hinweises auf die Patenterteilung:
**14.10.87 Patentblatt 87/42**

(84) Benannte Vertragsstaaten:
**AT BE CH DE FR GB IT LI LU NL SE**

(56) Entgegenhaltungen:
K.K. AGLINTSEV et al.: "Applied dosimetry", 1965;
Iliffe Books Ltd., London, GB, Seiten 137-143;
NIELS W. HOLM et al.: "Manual on radiation
dosimetry", 1970, Marcel Dekker Inc., New York,
US, Seiten 185-187;
PROCEEDINGS OF THE INTERNATIONAL
CONFERENCE ON THE PEACEFUL USES OF
ATOMIC ENERGY, Band 14, 8.-20. August 1955,
Genf, CH, Seiten 172-175, New York, US; W.C.
ROESCH et al.: "Portable instruments for beta-ray
dosimetry"
WILLIAM J. PRICE: "Nuclear radiation detection",
zweite Ausgabe, 1964, MCGraw-Hill Book
Company, New York, US, Seiten 99-101;
JOURNAL OF SCIENTIFIC INSTRUMENTS, Band 27,
Juni 1950, Seiten 157-160, London, GB; F. B.
WHITING et al.: "A portable battery operated
radiation monitor"

(73) Patentinhaber: **Kernforschungsanlage Jülich
Gesellschaft mit beschränkter Haftung, Postfach
1913, D-5170 Jülich 1 (DE)**

(72) Erfinder: **Keller, Manfred, Dr., Ginsterweg 10,
D-5170 Jülich (DE)**
Erfinder: **Opladen, Günter, Heimbacher Strasse 8
a, D-5170 Jülich (DE)**

(74) Vertreter: **Paul, Dieter- Alfred, Dipl.- Ing.,
Fichtestrasse 18, D-4040 Neuss 1 (DE)**

(56) Entgegenhaltungen: (Fortsetzung)
ATOMKERNENERGIE-KERNTECHNIK, Band 44, Nr.
2, März 1984, Seiten 172-173, München, DE; "Beta-
Gamma-Dosisleistungsmesser"

## Beschreibung

Die Erfindung betrifft ein Meßgerät zur Messung der Dosis bzw. Dosisleistung in, insbesondere inhomogenen, Beta-Gamma-Strahlungsfeldern, mit einer Ionisationskammer, einem Meßverstärker und einer Anzeigeeinrichtung, wobei die Ionisationskammer zumindest ein Endfenster aus gewebeäquivalentem Material für Beta- und Gamma-Strahlung, insbesondere mit einem Flächengewicht von 7 mg/cm2, aufweist.

Das Buch "Strahlenschutzpraxis" von M. Oberhofer gibt einen Überblick über die bekannten Meßgeräte zur Bestimmung der Dosis bzw. Dosisleistung in ionisierenden Strahlenfeldern. Auf den Seiten 43 und 44 sowie 132 sind Meßgeräte mit Ionisationskammern beschrieben bzw. gezeigt, die für die Erfassung der Gesamtdosis aus Beta- und Gammastrahlung geeignet sind. Zur Messung der Dosisanteile der Beta- und Gammastrahlen an der Gesamtdosis werden die Fenster der Ionisationskammern mit gewebeäquivalenten Hauben, die für Betastrahlung undurchlässig sind, verschlossen. Auf diese Weise erhält man den von der Gammastrahlung herrührenden Dosisanteil. Der Betastrahlungsanteil ergibt sich dann einfach durch Differenzbildung aus Gesamtdosis und Gammastrahlungsanteil.

Die vorbeschriebenen Beta-Gamma-Dosisleistungsmeßgeräte eignen sich nur für homogene Strahlungsfelder, wie sie von großflächig kontaminierten Oberflächen erzeugt werden. Häufig sind jedoch die Strahlungsfelder stark inhomogen, beispielsweise bei nur kleinen kontaminierten Flächen und bei Punktstrahlern. Bei Arbeitsvorgängen, die in solchen Strahlungsfeldern durchgeführt werden, treten deshalb örtlich begrenzt unerwartete Strahlenüberexpositionen auf. Dies liegt daran, daß man bei der Konzeption der bisher auf dem Markt befindlichen Meßgeräte von homogenen Strahlungsfeldern ausging und dem Problem inhomogener Strahlungsfelder keine Bedeutung zumaß. Diese Meßgeräte können jedoch gerade örtlich unterschiedliche Dosisverhältnisse nur unzureichend erfassen, so daß in inhomogenen Strahlungsfeldern hantierende Personen stärker gefährdet sind, als es die bisherigen Meßgeräte erscheinen ließen.

Der Erfindung liegt deshalb die Aufgabe zugrunde, ein Meßgerät der eingangs genannten Art so zu gestalten, daß mit ihm auch inhomogene Beta-Gamma-Strahlungsfelder in kleinen Raumbereichen, in Oberflächennähe und bei Kontaktnahme über einen großen Meßbereich meßtechnisch erfaßt werden.

Diese Aufgabe wird erfindungsgemäß dadurch gelöst, daß die Ionisationskammer mit einem Endfensterdurchmesser um die 5 cm und niedriger, vorzugsweise sogar nur maximal 3 cm, ausgebildet und das Endfenster mit einer abnehmbaren Lochblende versehen ist, die ein Durchgangsloch von ungefähr 1 cm2 Fläche

aufweist, ansonsten jedoch zumindest für Betastrahlung undurchlässig ist. Bei einem Durchmesser des Endfensters von etwa 3 cm sollte die Tiefe der Ionisationskammer bei etwa 2 cm liegen.

Mit diesem Meßgerät läßt sich bei nicht aufgesetzter Lochblende in einem inhomogenen Strahlenfeld die Dosisleistung der Beta-Gamma-Strahlung in Oberflächennähe oder sogar im Oberflächenkontakt problemlos messen, sofern das Strahlungsfeld innerhalb des Durchmessers des Endfensters im wesentlichen noch homogen ist. Dies reicht in der Vielzahl von Fällen aus. Damit aber auch kleinflächige Strahlungsquellen, insbesondere Punktstrahler, zutreffend erfaßt werden, besitzt das erfindungsgemäße Meßgerät die abnehmbare Lochblende. Ist sie aufgesetzt, so können die Beta-Strahlen nur noch über ein etwa 1 cm2 großes Loch in die Ionisationskammer gelangen. Der hierdurch bedingten Verringerung der Meßempfindlichkeit kann durch einen Multiplikationsfaktor (Blendenfaktor) Rechnung getragen werden, mit dem der angezeigte Meßwert multipliziert wird.

Mit diesem Meßgerät besteht somit die Möglichkeit, auch in inhomogenen Strahlenfeldern zuverlässige Messungen der Dosisleistung durchzuführen. Dabei ist von besonderem Vorteil, daß mittels eines Meßgerätes ein breites Spektrum von inhomogenen Strahlungsfeldern abgedeckt werden kann. Entsprechend erhöht sich die Sicherheit für die Personen, die in solchen Strahlungsfeldern operieren.

In Ausbildung der Erfindung ist vorgesehen, daß das Volumen der Ionisationskammer und die Lochblende so aufeinander abgestimmt sind, daß die Lochblende in inhomogenen Strahlungsfeldern, bezogen auf den Endfensterdurchmesser, eine Meßwertveränderung um zumindest eine Zehnerpotenz bewirkt. Auf diese Weise lassen sich am einfachsten die angezeigten Meßwerte in die tatsächlichen Werte umrechnen. Die Abstimmung kann dabei durch entsprechende Versuche einfach durchgeführt werden.

Die Ionisationskammer sollte zweckmäßigerweise auch auf ihrer Mantelfläche Fenster mit gewebeäquivalentem Material aufweisen, so daß die aus einem Raumwinkel von 180° stammende Strahlung in der Ionisationskammer erfaßt wird. Hierdurch erhöht sich die Genauigkeit der Messung der Ortsdosis bzw. Ortsdosisleistung.

Das Gehäuse der Ionisationskammer ist vorzugsweise aus einer Aluminiumhülse gebildet, die am vorderen Ende offen ausgebildet und in ihrem Mantel eine Vielzahl von Schlitzen aufweist. Dabei sollte das gewebeäquivalente Material über die Schlitze sowie über das vordere Ende der Aluminiumhülse gespannt sein. Die Einspannung über das offene Ende der Aluminiumhülse kann mittels eines Einspannrings bewerkstelligt werden.

Die Erfindung sieht als alternative Lösung zu der vorbeschriebenen Ausführungsform vor, daß die Ionisationskammer ein Gehäuse mit einem Endfenster von etwa 1 cm² Fläche aufweist, wobei in der Ionisationskammer eine zum Endfenster hin zulaufende Innenelektrode mit einem Basisdurchmesser angeordnet ist, der etwa das Fünffache des Durchmessers des Endfensters beträgt. Aufgrund dieser Geometrie der Innenelektrode wird das von der einfallenden Strahlung beaufschlagte Meßvolumen bei Annäherung an die Strahlungsquelle immer größer, so daß die Empfindlichkeit der Ionisationskammer im wesentlichen unabhängig vom Abstand der Strahlungsquelle ist. Der Einsatz von Lochblenden mit der Notwendigkeit, angezeigte Meßwerte mit einem Blendenfaktor zu multiplizieren, ist bei dieser Ausführungsform nicht erforderlich.

Zweckmäßigerweise ist die Innenelektrode kegelförmig ausgebildet. Desgleichen kann der Abstand der Spitze der Innenelektrode zum Endfenster etwa die Hälfte des Durchmessers des Endfensters betragen.

Unabhängig von der Ausbildung der Ionisationskammer ist diese zweckmäßigerweise am Ende eines Handstabes angeordnet, der auch den Verstärker enthält. Auf diese Weise ist eine besonders handliche und auch in beengten Ortsverhältnissen einsetzbare Lösung gefunden. Dabei sollte der Handstab und die Ionisationskammer den gleichen Außendurchmesser haben.

Schließlich ist vorgesehen, daß der Handstab über ein flexibles Kabel mit der Anzeigeeinrichtung verbunden ist.

In der Zeichnung ist die Erfindung an Hand von Ausführungsbeispielen näher veranschaulicht. Es zeigen:

Figur 1 eine Seitenansicht mit Teilschnitt durch eine Handsonde eines Meßgerätes für die Erfassung der Dosis bzw. Dosisleistung in Strahlungsfeldern;

Figur 2 eine Lochblende für die Handsonde gemäß Figur 1,

Figur 3 einen Schnitt durch eine Ionisationskammer für die Handsonde gemäß Figur 1, und

Figur 4 die in Figur 1 gezeigte Handsonde, jedoch in schematischer Ausführung.

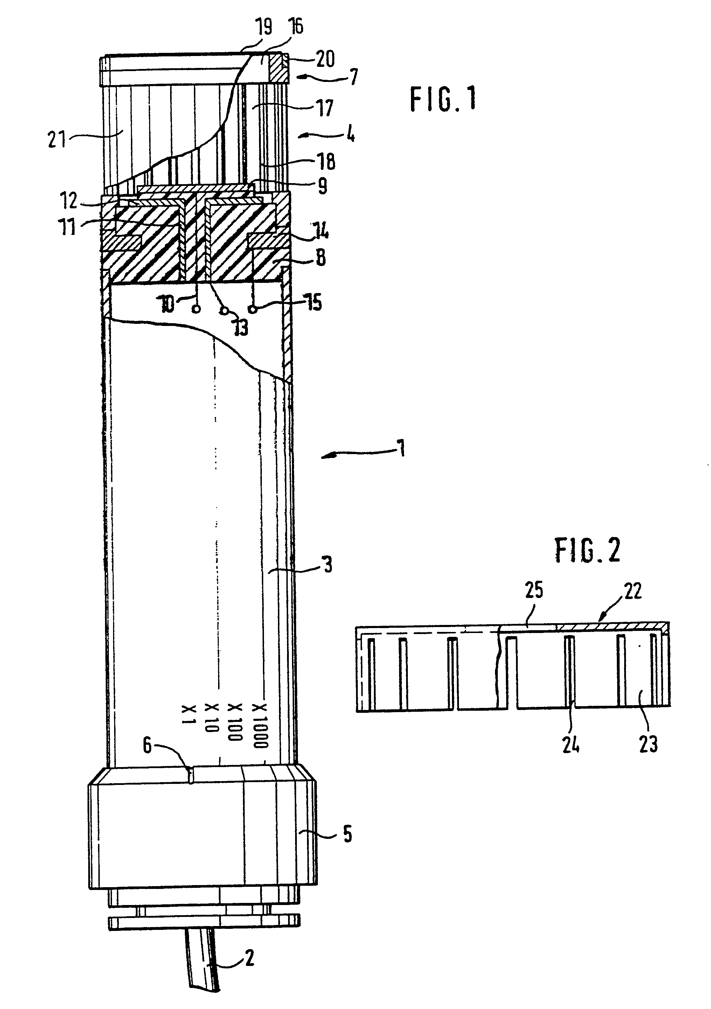

Die in Figur 1 gezeigte Handsonde 1 ist Teil eines Megerätes zur Messung der Dosis bzw. Dosisleistung in insbesondere inhomogenen Beta-Gamma-Strahlungsfeldern. Über ein flexibles Kabel 2 ist die Handsonde 1 mit einem hier nicht dargestellten Anzeigegerät verbunden, das ein Anzeigeinstrument sowie eine Stromversorgung enthält.

Die Handsonde 1 ist zylindrisch ausgebildet und besteht aus einem Verstärkerteil 3 und einer an dessen vorderen Ende angeordneten Ionisationskammer 4, die mit Luft gefüllt ist. Beide haben einen Durchmesser von 3 cm, der durch die Größe des in dem Verstärkerteil 3 angeordneten Meßverstärkers bestimmt wird.

Am hinteren Ende des Verstärkerteils 2 ist ein drehbarer Ring 5 gelagert, mit dem durch Drehen ein Bereichsschalter zur Umschaltung der Meßbereiche auf dem Anzeigeinstrument betätigt wird. Eine Kerbe 6 auf dem Ring 5 zeigt dabei jeweils auf den auf dem Verstärkerteil 3 angezeigten Wert, mit der die Angabe auf dem Anzeigeinstrument multipliziert werden muß.

Die am vorderen Ende des Verstärkerteils 3 angesetzte Ionisationskammer 4 weist ein Kammergehäuse 7 aus Aluminium auf, das auf einem Isolierkörper 8 aufgeschraubt ist. Aufgrund dieser Verbindung kann die Ionisationskammer 4 ohne Weiteres gegen anders geformte Ionisationskammern ausgewechselt werden, wenn dies erwünscht ist.

Der Isolierkörper 8 besteht aus einem elektrisch hoch isolierenden Kunststoff, in den insgesamt drei Elektroden voneinander getrennt angeordnet sind. Auf der Vorderseite des Isolierkörpers 8 ist eine Innenelektrode 9 angebracht, die über eine Mittelleitung 10 mit dem Meßverstärker verbunden ist. Der Mittelleiter 10 ist im Abstand von einer Schutzelektrode 11 umgeben, die hülsenförmig ausgebildet und vorderseitig einen ringscheibenförmigen Kragen 12 aufweist. Am hinteren Ende hat sie einen Anschluß 13, über den sie ein Potential erhält. Die Schutzelektrode 11 ist wiederum umgeben von einer ringscheibenförmigen Aussenelektrode 14, die mit dem Kammergehäuse 7 in elektrisch leitender Verbindung steht, so daß über den Anschluß 15 ein bestimmtes Potential auf das Kammergehäuse 7 gegeben werden kann.

Das Kammergehäuse 7 selbst ist vorne offen ausgebildet, so daß sich dort ein Endfenster 16 ergibt. Zusätzlich sind in dem Mantel des Kammergehäuses 7 axial verlaufende Schlitze 17 nebeneinander eingefräst, so daß in diesem Bereich nur noch dünne Stege 18 übrig geblieben sind.

Über das Endfenster 16 ist ein gewebeäquivalentes Material 19 mit einem Flächengewicht von 7 mg/cm² gespannt. Es wird von einem Spannring 20 außen eingeklemmt. Auch die Schlitze 17 werden von außen auf den Stegen 18 aufliegendem gewebeäquivalentem Material 21 abgedeckt. Dieses Material 19, 21 besteht in beiden Fällen aus einer außen liegenden Isolierfolie aus Kunststoff und innen aus einer wesentlich dünneren, metallisierten Isolierfolie. Aufgrund dieser Ausbildung können Beta- und Gammastrahlen aus einem Halbraum von 180° in die Ionisationskammer 4 eindringen und erfaßt werden. Aufgrund des geringen Durchmessers der Ionisationskammer 4 werden auch wesentliche Inhomogenitäten im Strahlungsfeld zutreffend erfaßt. Für den Fall, daß das Strahlungsfeld unterhalb des Durchmessers des Endfensters 16 inhomogen ist, wird über das Endfenster 16 eine Lochblende 22, wie sie in Figur 2 vergrößert dargestellt ist, gestülpt. Damit sie dann fest sitzt, sind in den Rand 23 Einschnitte 24 vorgesehen, die ein Aufweiten des Randes 23 und damit einen federnden Sitz ermöglichen.

Die Lochblende 22 hat mittig eine runde Öffnung 25, über die dann Beta- und Gamma-Strahlen in die Ionisationskammer eindringen können. Der übrige, von der Lochblende 22 abgedeckte Bereich des Endfensters 16 ist für Beta-Strahlung undurchlässig. Auf diese Weise läßt sich die Beta-Dosisleistung kleinflächiger Quellen bis hin zu punktförmigen Quellen in Quellennähe hinreichend genau messen. Die durch die Ausblendung verringerte Meßempfindlichkeit kann durch einen Blendenfaktor korrigiert werden, mit dem der angezeigte Wert multipliziert wird. Im vorliegenden Fall sind Lochblende 22 und das Volumen der Ionisationskammer 4 so aufeinander abgestimmt, daß der Blendenfaktor genau 10 beträgt.

Die in den Figuren 1 und 2 gezeigte Ionisationskammer 4 zeichnet sich durch hohe Empfindlichkeit im Vergleich zu bekannten Flachkammern aus, weil letztere nur ein minimales Volumen haben. Dabei ist von besonderem Vorteil die Kombinierungsmöglichkeit mit der Lochblende, da hierdurch auch kleinste Inhomogenitäten im Strahlungsfeld dosisäquivalent gemessen werden können.

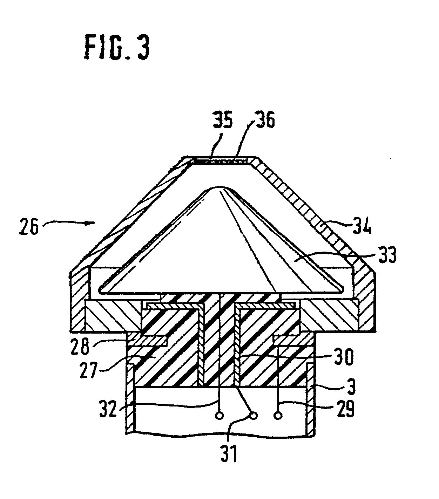

Die in Figur 3 im Querschnitt dargestellte Ionisationskammer 26 arbeitet ohne Blende. Sie ist auf das schon in Figur 1 dargestellte Verstärkerteil 3 aufgeschraubt. Das Isolierteil 27 ist ähnlich dem in Figur 1 gestaltet. In ihm eingegossen ist eine Außenelektrode 28 mit Anschluß 29, eine Schutzelektrode 30 mit Anschluß 31 sowie eine Mittenleitung 32. Diese Teile entsprechen denjenigen in Figur 1.

Im Unterschied zur Ausführungsform nach Figur 1 ist jedoch die mit der Mittenleitung 32 verbundene Innenelektrode 33 kegelförmig ausgebildet. Sie ist von einem ebenfalls kegelförmigen Kammergehäuse 34, das mit der Außenelektrode 28 in elektrisch leitender Verbindung steht und lediglich ein Endfenster 35 aufweist, verbunden. Letzteres ist mit gewebeäquivalentem Material 36 verschlossen, das demjenigen in Figur 1 entspricht. Es ist demnach für Beta- und Gammastrahlung durchlässig, während das Kammergehäuse 34 für Betastrahlung undurchlässig ist.

Aufgrund dieser besonderen Geometrie ist die Empfindlichkeit der Ionisationskammer 26 unabhängig von der Entfernung zur Strahlungsquelle. Dies beruht darauf, daß sich der Raumwinkel der von einer Strahlungsquelle ausgehenden und dann das Endfenster 35 passierenden Strahlung mit abnehmendem Abstand zu dieser Quelle vergrößert und somit auch das mit Annäherung an die Strahlungsquelle beaufschlagte Meßvolumen. Bei größerer Entfernung wird nämlich nur die Spitze der Innenelektrode 33 von Beta-Strahlung beaufschlagt, während sie bei Annäherung auch auf die hinteren Bereiche der Innenelektrode 33 auftrifft.

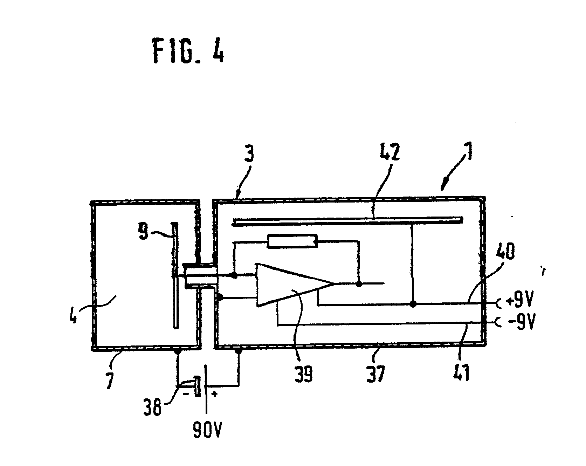

In Figur 4 ist die in Figur 1 gezeigte Handsonde 1 nochmals dargestellt, jedoch in schematischer Ausführung, um den elektrischen Aufbau zu verdeutlichen. Wie zu sehen ist, sind das Kammergehäuse 7 der Ionisationskammer 4 und das Verstärkergehäuse 37 des Verstärkerteils 3 an eine Stromquelle 38 angeschlossen, wobei das Kammergehäuse 7 Minuspotential und das Verstärkergehäuse 37 Pluspotential in Höhe von 90 Volt haben. Über das Verstärkergehäuse 37 und einem darin angeordneten Meßverstärker 39 erhält die Innenelektrode 9 dieses Pluspotential. Der Meßverstärker 39 wird über die Stromversorgungsleitungen 40, 41 mit einer Versorgungsspannung von 9 Volt beaufschlagt.

An die mit Pluspotential versehene Stromversorgungsleitung 40 ist eine parallel zur Längsachse des Verstärkergehäuses 37 verlaufende Saugelektrode 42 angeschlossen. Bei dieser Saugelektrode 42 handelt es sich um einen Draht, der aufgrund des Potentialunterschiedes verhindert, daß die durch den Gamma-Anteil entstehenden Elektronen zum Eingang des Meßverstärkers 39 gelangen. Wäre die Saugelektrode 42 nicht vorhanden, so würde der Meßverstärker 39 eine Überempfindlichkeit für Gamma-Strahlung bis zu 30 % aufweisen. Diese Überempfindlichkeit entstände durch Ionisation des Luftvolumens innerhalb des Verstärkergehäuses 37 infolge Gamma-Strahlung. Da beim Aufbau des Meßverstärkers 39 nicht alle Teile, die mit dem Eingang elektrisch verbunden sind, vollständig isoliert werden können, wirken kurze Drahtenden oder Teile von Lötstützpunkten als ungewollte Sammelektroden für Elektronen, die innerhalb des Verstärkergehäuses 37 infolge Ionisation entstehen. Mit der Sammelelektrode 42 wird dies vermieden.

## Patentansprüche

1. Meßgerät zur Messung der Dosis bzw. Dosisleistung in, insbesondere inhomogenen, Beta-Gamma-Strahlungsfeldern, mit einer Ionisationskammer, einem Meßverstärker und einer Anzeigeeinrichtung, wobei die Ionisationskammer zumindet ein Endfenster aus gewebeäquivalentem Material für Beta- und Gammastrahlung, insbesondere mit einem Flächengewicht von 7 mg/cm$^2$, aufweist, dadurch gekennzeichnet, daß die Ionisationskammer (4) mit einem Endfensterdurchmesser um die 5 cm und niedriger ausgebildet und das Endfenster (16) mit einer abnehmbaren Lochblende (22) versehen ist, die ein Durchgangsloch (25) von ungefähr 1 cm$^2$ aufweist, ansonsten jedoch zumindest für Beta-Strahlung undurchlässig ist.

2. Meßgerät nach Anspruch 1, dadurch gekennzeichnet, daß das Endfenster (16) einen Durchmesser von maximal 3 cm aufweist.

3. Meßgerät nach Anspruch 2, dadurch gekennzeichnet, daß die Tiefe der

4

Ionisationskammer bei etwa 2 cm liegt.

4. Meßgerät nach einem der Ansprüche 1 bis 3, dadurch gekennzeichnet, daß das Volumen der Ionisationskammer (4) und die Lochblende (22) so aufeinander abgestimmt sind, daß die Lochblende (22) in - auf den Endfensterdurchmesser bezogen - inhomogenen Strahlungsfeldern eine Meßwertveränderung um zumindest eine Zehnerpotenz bewirkt.

5. Meßgerät nach einem der Ansprüche 1 bis 4, dadurch gekennzeichnet, daß die Ionisationskammer (4) auch auf ihrer Mantelfläche Fenster (17) mit gewebeäquivalentem Material (21) aufweist.

6. Meßgerät nach Anspruch 5, dadurch gekennzeichnet, daß das Gehäuse (7) der Ionisationskammer aus einer Aluminiumhülse gebildet ist, die am vorderen Ende offen ausgebildet und die in ihrem Mantel eine Vielzahl von Schlitzen (17) aufweist.

7. Meßgerät nach Anspruch 6, dadurch gekennzeichnet, daß das gewebeäquivalente Material (19, 21) über die Schlitze (17) sowie über das vordere Ende der Aluminiumhülse gespannt ist.

8. Meßgerät nach Anspruch 7, dadurch gekennzeichnet, daß über das offene Ende der Aluminiumhülse ein Einspannring (20) zum Spannen des gewebeäquivalenten Materials (19) geschoben ist.

9. Meßgerät nach einem der Ansprüche 1 bis 8, dadurch gekennzeichnet, daß das Gehäuse (7) für die Ionisationskammer (4) abnehmbar befestigt, insbesondere aufgeschraubt ist.

10. Meßgerät zur Messung der Dosis bzw. Dosisleistung in, insbesondere inhomogenen, Beta-Gamma-Strahlungsfeldern, mit einer Ionisationskammer, einem Meßverstärker und einer Anzeigeeinrichtung, wobei die Ionisationskammer zumindest ein Endfenster aus gewebeäquivalentem Material für Beta-Strahlung, insbesondere mit einem Flächengewicht von 7 mg/cm$^2$ aufweist, dadurch gekennzeichnet, daß die Ionisationskammer (26) ein Gehäuse (34) mit einem Endfenster (35) von etwa 1 cm$^2$ Fläche aufweist, wobei in der Ionisationskammer eine zum Endfenster (35) hin zulaufende Innenelektrode mit einem Basisdurchmesser angeordnet ist, der etwa das Fünffache des Durchmessers des Endfensters (35) beträgt.

11. Meßgerät nach Anspruch 10, dadurch gekennzeichnet, daß die Innenelektrode (33) kegelförmig ist.

12. Meßgerät nach Anspruch 10 oder 11, dadurch gekennzeichnet, daß der Abstand der Spitze der Innenelektrode (33) vom Endfenster (35) etwa die Hälfte des Durchmessers des Endfensters (35) beträgt.

13. Meßgerät nach einem der Ansprüche 1 bis 12, dadurch gekennzeichnet, daß die Ionisationskammer (4, 26) am Ende eines Handstabes (3), der auch den Verstärker enthält, angeordnet ist.

14. Meßgerät nach Anspruch 13, dadurch gekennzeichnet, daß der Handstab (3) und die Ionisationskammer (4) den gleichen Außendurchmesser haben.

15. Meßgerät nach Anspruch 13 oder 14, dadurch gekennzeichnet, daß der Handstab (3) über ein flexibles Kabel (2) mit der Anzeigeeinrichtung verbunden ist.

16. Meßgrät nach einem der Ansprüche 1 bis 15, dadurch gekennzeichnet, daß das gewebeäquivalente Material (19, 21, 36) aus zumindest einer äußeren Schutzfolie, erforderlichenfalls mehrerer Schutzfolien sowie einer inneren, metallisierten Kunststoffolie besteht.

17. Meßgerät nach einem der Ansprüche 1 bis 16, dadurch gekennzeichnet, daß beim Meßverstärker (39) eine an eine elektrische Spannung angeschlossene Saugelektrode (42) für durch Gamma-Strahlung entstehende Elektronen angeordnet ist.

18. Meßgerät nach Anspruch 17, dadurch gekennzeichnet, daß die Saugelektrode (42) als längs des Meßverstärkers (39) laufender Draht ausgebildet ist.

## Claims

1. Apparatus for measuring the dose or dose rate in beta-gamma radiation fields, especially non-homogeneous fields of this type, with an ionisation chamber, a measuring amplifier, and a display device, the ionisation chamber having at least one end window of tissue-equivalent material for beta and gamma radiation, especially with a weight per unit area of 7 mg/cm$^2$, characterised in that the ionisation chamber (4) is constructed with an end window diameter of about 5 cm and less, and the end window (16) is provided with a detachable apertured diaphragm (22) which has a through aperture (25) of approximately 1 cm but otherwise is not pervious at least for beta radiation.

2. Measuring apparatus according to claim 1, characterised in that the end window (16) has a diameter of at the most 3 cm.

3. Measuring apparatus according to claim 2, characterised in that the depth of the ionisation chamber is approximately 2 cm.

4. Measuring apparatus according to one of claims 1 to 3, characterised in that the volume of the ionisation chamber (4), and the apertured diaphragm (22), are so adapted to one another that in radiation fields which are non-homogeneous - in relation to the end window diameter - the apertured diaphragm (22) effects a mmeasurement value modification by at least a power of ten.

5. Measuring apparatus according to one of claims 1 to 4, characterised in that the ionisation chamber (4) has windows (17) with tissue-equivalent material (21) in its circumferential surface also.

6. Measuring apparatus according to claim 5, characterised in that the housing (7) of the ionisation chamber is formed of an aluminium sleeve which is of open construction at the front end and which has a plurality of slots (17) in its circumferential wall.

7. Measuring apparatus according to claim 6, characterised in that the tissue-equivalent material (19, 21) is mounted over the slots (17) and also over the front end of the aluminium sleeve.

8. Measuring apparatus according to claim 7, characterised in that a fixing ring (20) is fitted over the open end of the aluminium sleeve for mounting the tissue-equivalent material (19).

9. Measuring apparatus according to one of claims 1 to 8, characterised in that the housing (7) for the ionisation chamber (4) is secured detachably, especially by being screwed-on.

10. Apparatus for measuring the dose or dose rate in beta-gamma radiation fields, especially non-homogeneous fields of this type, with an ionisation chamber, a measuring amplifier, and a display device, the ionisation chamber having at least one end window made of tissue-equivalent material for beta radiation, especially with a weight per unit of surface area of 7 mg/cm$^2$, characterised in that the ionisation chamber (26) has a housing (34) with an end window (35) of approximately 1 cm$^2$ in area, there being arranged in the ionisation chamber an inner electrode extending towards the end window (35) and having a base diameter which amounts to about five times the diameter of the end window (35).

11. Measuring apparatus according to claim 10, characterised in that the inner electrode (33) is conical in shape.

12. Measuring-apparatus according to claim 10 or 11, characterised in that the spacing of the tip of the inner electrode (33) from the end window (35) amounts to about half the diameter of the end window (35).

13. Measuring apparatus according to one of claims 1 to 12, characterised in that the ionisation chamber (4, 26) is arranged at the end of a hand-held bar (3) which also contains the amplifier.

14. Measuring apparatus according to claim 13, characterised in that the hand-held bar (3) and the ionisation chamber (4) are of the same outer diameter.

15. Measuring apparatus according to claim 13 or 14, characterised in that the hand-held bar (3) is connected to the display device by means of a flexible cable (2).

16. Measuring apparatus according to one of claims 1 to 15, characterised in that the tissue-equivalent material (19, 21, 36) consists of at least one outer protective film or sheet element, if necessary a plurality of protective sheet elements, and of an inner, metal-coated, synthetic plastic material sheet element.

17. Measuring apparatus according to one of claims 1 to 16, characterised in that a collecting electrode (42), connected to an electrical voltage, for electrons produced by gamma radiation is arranged at the measuring amplifier (39).

18. Meausuring apparatus according to claim 17, characterised in that the collecting electrode (42) is constructed as a wire extending lengthwise of the measuring amplifier (39).

**Revendications**

1. Appareil de mesure de la dose ou du débit de dose dans des champs de rayonnements bêta-gamma, notamment non homogènes, comprenant une chambre d'ionisation, un amplificateur de mesure et un dispositif d'affichage, la chambre d'ionisation comportant au moins une fenêtre d'extrémité en un matériau équivalent à un tissu pour un rayonnement bêta et gamma et ayant notamment un poids, par unité de surface, de 7 mg/cm$^2$, caractérisé en ce que la chambre d'ionisation (4) est constituée en ayant un diamètre de la fenêtre d'extrémité de 5 cm environ ou inférieure à cette valeur, et la fenêtre d'extrémité (16) est munie d'un écran perforé (22) pouvant être enlevé, qui a un trou de passage (25) de 1 cm$^2$ environ, mais qui, toutefois, est imperméable au moins aux rayonnement bêta.

2. Appareil de mesure suivant la revendication 1, caractérisé en ce que la fenêtre d'extrémité (16) a un diamètre de 3 cm au maximum.

3. Appareil de mesure suivant la revendication 2, caractérisé en ce que la profondeur de la chambre d'ionisation est de 2 cm environ.

4. Appareil de mesure suivant l'une des revendications 1 à 3, caractérisé en ce que le volume de la chambre d'ionisation (4) et l'écran perforé (22) sont harmonisés de façon que l'écran perforé (22) entraîne -rapporté au diamètre de la fenêtre d'extrémité- une variation de la valeur de mesure d'au moins une puissance de dix des champs de rayonnement non homogènes.

5. Appareil de mesure suivant l'une des revendications 1 à 4, caractérisé en ce que la chambre d'ionisation (4) comporte également, sur sa surface latérale, des fenêtres (17) avec un matériau (21) équivalent à un tissu.

6. Appareil de mesure suivant la revendication 5, caractérisé en ce que le corps (7) de la chambre d'ionisation est constitué d'un manchon en aluminium dont l'extrémité antérieure est ouverte et dont la surface latérale comporte un grand nombre de fentes (17).

7. Appareil de mesure suivant la revendication 6, caractérisé en ce que le matériau (19, 21) équivalent à un tissu est tendu sur les fentes (17), ainsi que sur l'extrémité antérieure du manchon en aluminium.

8. Appareil de mesure suivant la revendication 7, caractérisé en ce que, sur l'extrémité ouverte du manchon en aluminium, est enfilé un anneau de blocage (20) destiné à bloquer le matériau (19) équivalent à un tissu.

9. Appareil de mesure suivant l'une des revendications 1 à 8, caractérisé en ce que le corps (7) de la chambre d'ionisation (4) est fixé, 'de manière détachable, et notamment est vissé.

10. Appareil de mesure de la dose ou du débit de dose dans des champs de rayonnement bêta-gamme, notamment non homogènes, comprenant une chambre d'ionisation, un amplificateur de mesure et un dispositif d'affichage, la chambre d'ionisation comprenant au moins une fenêtre d'extrémité en un matériau équivalent à un tissu pour le rayonnement bêta, et ayant notamment un poids par unité de surface de 7 mg/cm$^2$, caractérisé en ce que la chambre d'ionisation (26) comporte un corps (34) ayant une fenêtre d'extrémité (35) d'une surface de 1 cm$^2$ environ, une électrode intérieure ayant un diamètre de base qui représente environ cinq fois le diamètre de la fenêtre d'extrémité (35) étant disposée dans la chambre d'ionisation et s'étendant en direction de la fenêtre d'extrémité (35).

11. Appareil de mesure suivant la revendication 10, caractérisé en ce que l'électrode intérieure (33) est conique.

12. Appareil de mesure suivant la revendication 10 ou 11, caractérisé en ce que la distance entre le sommet de l'électrode intérieure (33) et la fenêtre d'extrémité (35) représente environ la moitié du diamètre de la fenêtre d'extrémité (35).

13. Appareil de mesure suivant l'une des revendications 1 à 12, caractérisé en ce que la chambre d'ionisation (4, 26) est disposée à l'extrémité d'un barreau de préhension (23) qui contient aussi l'amplificateur.

14. Appareil de mesure suivant la revendication 13, caractérisé en ce que le barreau de préhension (3) et la chambre d'ionisation (4) ont le même diamètre extérieur.

15. Appareil de mesure suivant la revendication 13 ou 14, caractérisé en ce que le barreau de préhension (3) est relié au dispositif d'affichage par un câble (2) souple.

16. Appareil de mesure suivant l'une des revendications 1 à 15, caractérisé en ce que le matériau (19, 21, 36) équivalent à un tissu est constitué d'au moins une feuille extérieure de protection, le cas échéant de plusieurs feuilles de protection, ainsi que d'une feuille intérieure métallisée en matière plastique.

17. Appareil de mesure suivant l'une des revendications 1 à 16, caractérisé en ce que, sur l'amplificateur de mesure (39), est montée une électrode d'extraction (42) des électrons produits par le rayonnement gamma.

16. Appareil de mesure suivant la revendication 17, caractérisé en ce que l'électrode d'extraction (42) est constituée sous la forme d'un fil métallique s'étendant le long de l'amplificateur de mesure (39).

FIG.1

FIG.2

X 1000
X 100
X 10
X 1

FIG. 3

# FIG. 4